# EUROPEAN PATENT SPECIFICATION

(11) **EP 2 760 071 B1**
(45) Date of publication and mention of the grant of the patent: **08.04.2015**
(21) Application number: 14150898.6
(22) Date of filing: 13.01.2014
(51) Int. Cl.: H01M 4/86, H01M 4/88, H01M 4/90, H01M 8/12

(54) **Fuel electrode doubling as support of solid oxide fuel cell and method of producing same**
Brennstoffelektrodendopplung als Träger einer Hochtemperatur-Brennstoffzelle und Verfahren zur Herstellung davon
Doublage d'électrode à combustible en tant que support de pile à combustible à oxyde solide et son procédé de production

(30) Priority: 25.01.2013 JP 2013012577
(43) Date of publication of application: 30.07.2014
(73) Proprietor: Kabushiki Kaisha Riken, Chiyoda-ku, Tokyo 102-8202 (JP)
(72) Inventor: Okamoto, Takashi, Kumagaya-shi, Saitama 3608522 (JP)
(74) Representative: HGF Limited

(56) References cited:
- EP-A1- 1 596 458
- EP-A1- 1 870 950
- EP-A1- 2 211 405
- WO-A1-02/03491
- DE-A1-102006 030 393

## Description

### TECHNICAL FIELD

The present invention relates to a fuel electrode that doubles as a support of a solid oxide fuel cell and also to a method of producing the same. Also, the present invention relates to a fuel-electrode-supported solid oxide fuel cell that includes the fuel electrode and a method of producing the same.

### BACKGROUND ART

A solid oxide fuel cell (hereinafter, referred to as SOFC) that generates power by supplying a combustible gas such as hydrogen and an oxidizing gas containing oxygen to a fuel cell configured by separating a fuel electrode and an air electrode with a solid oxide electrolyte has been known. Since the SOFC operates at high temperature and thus has high power generation efficiency as well as being capable of generating power also from a fuel gas other than pure hydrogen, the SOFC is expected as a next generation fuel cell.

The SOFC is primarily categorized into an electrolyte-supported cell having a thick electrolyte and a fuel-electrode-supported cell having a thick fuel electrode. However, since the electrolyte causes significant internal resistance during power generation, the fuel-electrode-supported cell that may have a thin electrolyte has been increasingly used for the purpose of improving a battery performance.

As a technology associated with the fuel electrode of the electrolyte-supported cell, JP 10-21932 A (PLT 1) describes a fuel electrode formed of a porous body having a ceramic particle framework. Metal particles, on or in which fine ceramic particles are precipitated, are dispersed inside of holes of the porous body (claim 2). According to PLT 1, this fuel electrode may be obtained in the following order. First, ceramic powder of YSZ or the like with an average particle diameter of approximately 3 µm is applied on one surface of a solid electrolyte disc having the air electrode formed on one side thereof and then sintered at approximately 1400 °C, so as to form the porous body having the ceramic particle framework. Thereafter, organic metal compound solution containing at least one metal element of Ni, Co, Fe and Ru, and Zr and/or Ce is poured into the holes of the porous body and thermally decomposed.

On the other hand, as the fuel electrode of the fuel-electrode-supported cell, nickel-zirconia cermet obtained by mixing nickel oxide with an average particle diameter of approximately 1µm (NiO, note that it turns Ni metal during operation of the fuel cell) and zirconia (ZrO₂) fine particles with an average particle diameter of approximately 0.5µm has been known. Also, JP 2009-224346 A (PLT 2) describes a fuel electrode material that consists of a mixture of zirconia coarse particles, zirconia fine particles and nickel or nickel oxide particles, where diameters of these particles satisfy the following relationship: zirconia coarse particles>nickel or nickel oxide particles>zirconia fine particles, and weights of the zirconia coarse particles, the nickel or nickel oxide particles and the zirconia fine particles satisfy the following ratio: 7-4:3-6:1. According to PLT 2, this fuel electrode material may be obtain by, for example, first mixing YSZ coarse particles and NiO particles for 48 to 60 hours and then adding YSZ fine particles to the mixture, followed by further mixing for about 48 hours.

### CITATION LIST

### Patent Literature

PTL 1: JP 10-21932 A
PLT 2: JP 2009-224346 A

### SUMMARY OF INVENTION

### (Technical Problem)

The fuel electrode is in a reducing atmosphere during operation of the SOFC, as hydrogen is supplied to the fuel electrode. However, at stop of the operation, the air reaches the fuel electrode and the fuel electrode enters in an oxidizing atmosphere. Therefore, in the course of use repeating operation of SOFC and stop operation, the fuel electrode is exposed alternately to the reducing atmosphere/oxidazing atmosphere. In the oxidazing atmosphere, electrode particles Ni of the fuel electrode are oxidized to NiO and a volume of the electrode particles expand. Such irreversible expansion of the electrode particles leads to deterioration of conductivity and strength of the fuel electrode, causing impaired battery characteristics and reduced life of the SOFC. Further, gradual aggregation of the Ni particles in the course of repetition of the reducing atmosphere/oxidizing atmosphere has been also a cause of deterioration of the battery characteristics of the SOFC.

Therefore, a fuel electrode whose conductivity and strength does not deteriorate through repetitive exposure to the reducing atmosphere/oxidizing atmosphere has been required. According to studies by the present inventor, however, it was found that neither conventional nickel-zirconia cermet nor the fuel electrode produced from the fuel electrode material described in PLT 2 meets the requirement.

Accordingly, in consideration of the above problems, the present invention aims to provide a fuel electrode doubling as a support of a solid oxide fuel cell, whose conductivity and strength hardly lower through repetitive exposure to the reducing atmosphere/oxidazing atmosphere, as well as a method of producing such a fuel electrode. The present invention also aims to provide a fuel-electrode-supported solid oxide fuel cell having a long life with improved cycle resistance of the fuel electrode, and also to provide a method of producing such a fuel-electrode-supported solid oxide fuel cell.

### (Solution to Problem)

A summary constitution of the present invention for achieving the above objects is as follows. That is, a fuel electrode doubling as a support of a solid oxide fuel cell according to the present invention includes: a three-dimensional network structure formed of oxide coarse particles with an average particle diameter of 30 to 90 µm and a first sol containing first oxide fine particles with an average particle diameter of 0.1 µm or smaller dispersed therein, where the oxide coarse particles are connected to one another via an aggregate of the first oxide fine particles; electrode particles having a function as an electrode catalyst dispersed in gaps of the three-dimensional network structure; and an aggregate of second oxide fine particles that is formed of a second sol containing the second oxide fine particles with an average particle diameter of 0.1 µm or smaller dispersed therein and connects the electrode particles to a surface in the gap of the three-dimensional network structure, wherein the oxide coarse particles are connected to one another without the electrode particle.

Here, preferably, the aggregate of the second oxide fine particles connects the electrode particles to the surface in the gap of the three-dimensional network structure and, simultaneously, partially covers surfaces of the electrode particles.

Also preferably, the fuel electrode of the present invention further includes oxide particles with an average particle diameter of 0.2 to 1.0 µm that are dispersed in the gap of the three-dimensional network structure and partially cover the surfaces of the electrode particles. More preferably, the oxide particles are stabilized zirconia.

Preferably, the electrode particles have an average particle diameter of 0.4 to 4.0 µm.

Here, each of the oxide coarse particle, the first oxide fine particle and the second oxide fine particle is preferably at least one selected from a group including zirconia, alumina, silica and ceria, and is more preferably stabilized zirconia.

A fuel-electrode-supported solid oxide fuel cell according to the present invention includes the fuel electrode described above, a solid oxide electrolyte film formed on the fuel electrode, and an air electrode formed on the solid oxide electrolyte film.

A method of producing a fuel electrode doubling as a support of a solid oxide fuel cell according to the present invention includes: a first step of obtaining a compact from a mixture of powder of oxide coarse particles with an average particle diameter of 30 to 90 µm and a first sol containing first oxide fine particles with an average particle diameter of 0.1µm or smaller dispersed therein; a second step of impregnating the compact with slurry prepared by mixing powder of electrode particles having a function as an electrode catalyst and a second sol containing second oxide fine particles with an average particle diameter of 0.1µm or smaller dispersed therein; and a third step of, after the second step, obtaining a fuel electrode by calcining the compact.

Here, after the first step and before the second step, the compact is preferably subjected to a heat treatment at temperature below a sintering temperature of the compact.

Preferably, the slurry is prepared by further mixing powder of oxide particles with an average particle diameter of 0.2 to 1.0 µm. More preferably, the oxide particles are stabilized zirconia.

Preferably, the powder of electrode particles has an average particle diameter of 0.4 to 4.0 µm.

Preferably, total mass of solids in the first sol of the mixture and in the second sol of the slurry is 5 to 60 mass% of total mass of the mixture and the slurry.

Here, each of the oxide coarse particle, the first oxide fine particle and the second oxide fine particle is preferably at least one selected from a group including zirconia, alumina, silica and ceria, and is more preferably stabilized zirconia.

A method of producing a fuel-electrode-supported sold oxide fuel cell according to the present invention includes, in addition to the steps of the method of producing the fuel electrode described above, a step of forming a solid oxide electrolyte film on the fuel electrode and a step of forming an air electrode on the solid oxide electrolyte film.

Here, the solid oxide electrolyte film is preferably formed by, after the second step and before the third step, applying electrolyte material on the compact and, at the third step, calcining the electrolyte material together with the compact.

### (Advantageous Effect of Invention)

According to the fuel electrode doubling as the support of the solid oxide fuel cell of the present invention, conductivity and strength hardly lower through repetitive exposure to the reducing atmosphere/oxidazing atmosphere. According to the method of producing the fuel electrode doubling as the support of the solid oxide fuel cell of the present invention, a fuel electrode whose conductivity and strength hardly lower through repetitive exposure to the reducing atmosphere/oxidazing atmosphere may be produced.

Also, the solid oxide fuel cell according to the present invention may achieve a long life with improved cycle resistance of the fuel electrode. According to the method of producing the solid oxide fuel cell of the present invention, a solid oxide fuel cell having a long life with improved cycle resistance of the fuel electrode may be produced.

### BRIEF DESCRIPTION OF DRAWINGS

FIG. 1 is a schematic view of a three-dimensional network structure 10 serving as a framework of a fuel electrode of a solid oxide fuel cell according to the present invention.
FIG. 2 is a schematic view of a fuel electrode 30 of a solid oxide fuel cell according to the present invention.
FIG. 3 is a cross-sectional schematic view of a solid oxide fuel cell 100 according to the present invention.
FIG. 4 is a flowchart illustrating a process of a method of producing a fuel electrode of a solid oxide fuel cell according to one embodiment of the present invention.
FIG. 5 is a flowchart illustrating a process of a method of producing a solid oxide fuel cell according another embodiment of the present invention.
FIG. 6 is a SEM image of a three-dimensional network structure obtained in Example 1.
FIG. 7 is a SEM image of a three-dimensional network structure obtained in Example 1.
FIG. 8 is a referential SEM image of a three-dimensional network structure.
FIG. 9 is a result of an EDX analysis of a cross-section of a fuel electrode obtained by Example 1.

### DESCRIPTION OF EMBODIMENTS

The following is a description of embodiments of a fuel electrode doubling as a support of a solid oxide fuel cell (SOFC) according to the present invention and a method of manufacturing the same, as well as embodiments of a fuel-electrode-supported SOFC and a method of producing the same.

### (Fuel electrode and method of producing the same)

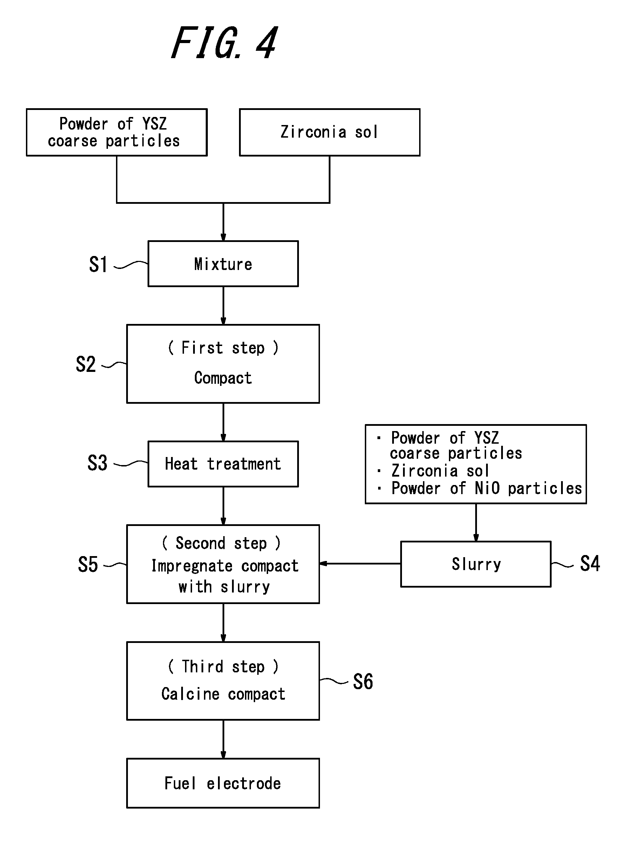

First, a method of producing a fuel electrode according to one embodiment of the present invention will be described with reference to FIG. 4. According to this method, at step S1, at first, a mixture is obtained by mixing powder of yttria stabilized zirconia (YSZ) coarse particles as oxide fine particles and zirconia sol as first sol containing zirconia fine particles as first oxide fine particles dispersed therein. Here, the powder of YSZ coarse particles has an average particle diameter of 30 to 90 µm, and the zirconia fine particles in the zirconia sol have an average particle diameter of 0.1 µm or smaller.

Next, as illustrated at step S2, a compact with a thickness of approximately 0.2 to 3 mm is prepared from the mixture by carrying out, for example, a wet method. As described in detail later, the compact forms a three-dimensional network structure serving as a framework of the fuel electrode.

According to the present embodiment, as illustrated at step S3, the compact is subjected to a heat treatment at temperature about, for example, 300 to 600 °C, which is lower than a sintering temperature of the compact.

At step S4, on the other hand, slurry is prepared by mixing powder of NiO particles as electrode particles having a function as an electrode catalyst, zirconia sol as second sol containing zirconia fine particles as second oxide fine particles dispersed therein, and powder of YSZ particles as oxide particles. Here, the powder of NiO particles may have an average particle diameter of 0.4 to 4.0 µm, and the zirconia fine particles in the zirconia sol have an average particle diameter of 0.1 µm or smaller. Also, the powder of YSZ particles has an average particle diameter of 0.2 to 1.0 µm. This slurry is used for filling gaps of the three-dimensional network structure with the NiO particles serving as the electrode particles. Although the electrode particles in the present embodiment are NiO at a stage of production process of the fuel electrode, the electrode particles become Ni in principle at a stage of power generation by the SOFC. However, as previously mentioned, expansion due to an irreversible oxidation reaction ofNi to become NiO in the course of use of the SOFC has been a problem to be solved.

Then, at step S5, the compact is impregnated with the slurry.

At step S6, lastly, the compact is calcined, thus the fuel electrode is obtained.

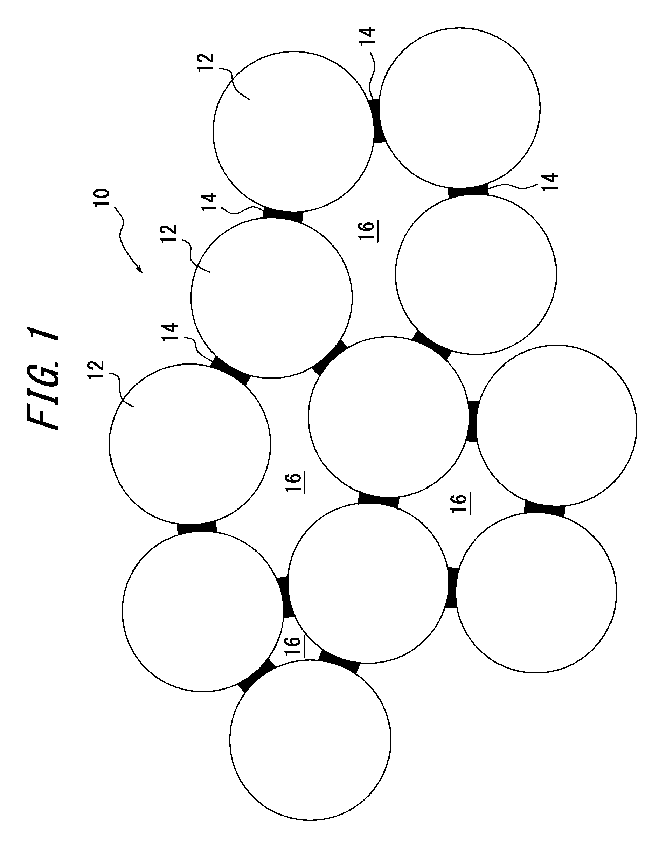

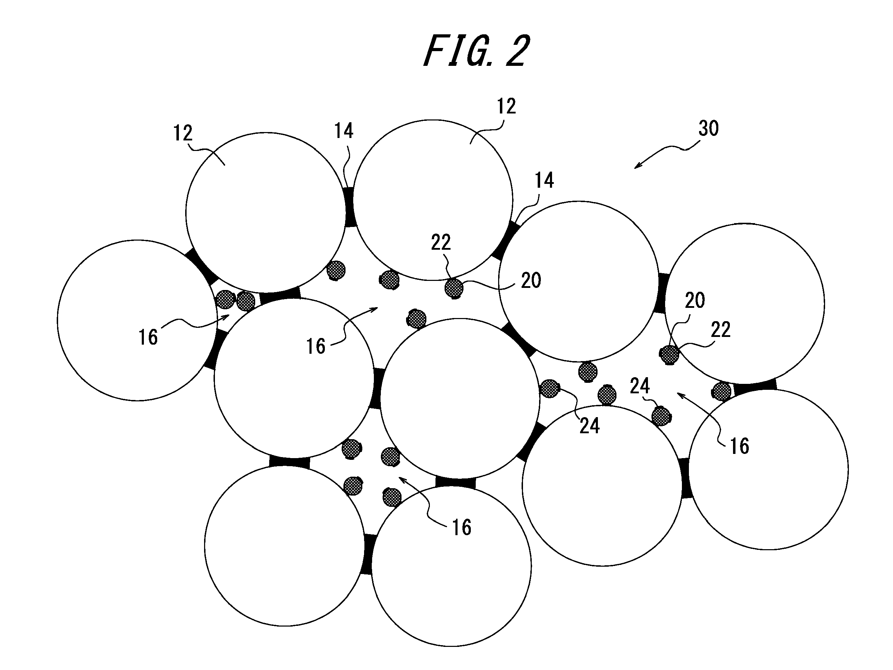

Next, a fuel electrode according to one embodiment of the present invention that may be obtained by the production method described above will be described with reference to FIG. 1 and FIG. 2. First, the compact obtained at step S2 is the three-dimensional network structure 10 schematically illustrated in FIG. 1. The three-dimensional network structure 10 is formed of the YSZ coarse particles 12 connected to one another via a zirconia fine particle aggregate 14 originating in the zirconia sol. Here, since the YSZ coarse particles 12 are very large as described above, the three-dimensional network structure 10 has numerous gaps formed therein. Also, nano-level zirconia fine particles form an aggregate that serves as a binder for firmly connecting the large YSZ coarse particles 12 to one another.

Then, the compact is impregnated with the slurry and calcined to obtain a fuel electrode 30, as schematically illustrated in FIG. 2. The NiO particles 20 serving as the electrode particles are dispersed in the gaps 16 of the three-dimensional network structure. Since the production method, after forming the three-dimensional network structure 10, fills the gaps 16 with the NiO particles 20, the YSZ coarse particles 12 are connected to one another without the NiO particle 20. Further, a zirconia fine particle aggregate 22 generated from the zirconia sol as the second sol connects the NiO particles 20 to a surface in the gap 16 of the three-dimensional network structure.

Further, an aggregate of the zirconia fine particles generated from the zirconia sol as the second sol may also form zirconia 24 that partially covers surfaces of the NiO particles 20. Some of the YSZ particles originating in the powder of YSZ particles with the average particle diameter of 0.2 to 1.0 µm are connected to the surfaces of the NiO particles by the aggregate described above to form the zirconia 24 that partially covers the surfaces of the NiO particles 20, and the remaining YSZ particles are dispersed in the gap 16 (not illustrated).

A thickness of the fuel electrode 30 is not particularly limited, as long as being usable as the support of the SOFC, but is preferably 0.2 to 5 mm. This is because, when the thickness is 0.2 mm or more, the fuel electrode may be reliably used as the support and, when the thickness is 5 mm or less, a fuel gas may be supplied in proper quantities to an electrolyte surface.

Here, characteristics of the fuel electrode and a method of producing the same according to the present embodiment will be described.

First, a conventional nickel-zirconia cermet is formed by mixing NiO with an average particle diameter of approximately 1µm and zirconia fine particles with an average particle diameter of approximately 0.5µm, and thus does not have a strong framework structure and binding between zirconia fine particles/NiO is not strong, either. Therefore, when the fuel electrode is exposed alternately to a reducing atmosphere/oxidazing atmosphere in a repetitive manner, Ni is oxidized to NiO and a volume of the electrode particles irreversibly expands in the oxidazing atmosphere, deteriorating the strength of the fuel electrode as described above and generating cracks, and aggregation of the electrode particles is also progressed in the reducing atmosphere, lowering conductivity.

Such a problem applies also to the fuel electrode produced from fuel electrode material in PLT 2 which describes that YSZ coarse particles form a framework of the fuel electrode. Since the fuel electrode is produced from the fuel electrode material containing all of the YSZ coarse particles, the NiO particles and the YSZ fine particles, intervention by NiO particles between the YSZ coarse particles may not be avoided. Therefore, expansion due to change of the electrode particles from Ni to NiO directly affects the strength of the framework of the YSZ coarse particles. That is, this fuel electrode is not sufficiently strong, either, and has been causing generation of cracks due to deterioration of the strength thereof and also causing deterioration of the conductivity due to a progression of aggregation of the electrode particles.

According to the present embodiment, on the other hand, a compact (three-dimensional network structure 10) serving as the framework of the fuel electrode is prepared in advance from a mixture containing no NiO particles and then the compact is filled with NiO particles 20 having the function as the electrode catalyst. Therefore, the YSZ coarse particles 12 of the three-dimensional network structure 10 forming the framework of the fuel electrode are connected to one another without the NiO particles 20 therebetween. Accordingly, since expansion due to the change of the electrode particle from Ni to NiO occurs only within the gap 16 of the three-dimensional network structure, the strength of the three-dimensional network structure 10 is not directly affected.

According to the present embodiment, also, the zirconia sol is added to the mixture for preparing the compact and the slurry for filling NiO particles. First, the zirconia sol in the mixture, by a sol-gel reaction in the course of formation of the compact, forms the zirconia fine particle aggregate 14. Since the zirconia fine particle aggregate 14 serves as the binder for firmly connecting the YSZ coarse particles 12 to one another, the three-dimensional network structure 10 of the present embodiment has very high strength. Next, the zirconia sol in the slurry is introduced into the compact and, by the sol-gel reaction again in the course of the heat treatment for calcination, forms a zirconia fine particle aggregate. Since this aggregate serves as the binder for firmly connecting the NiO particles 20 to the surface in the gap 16 of the three-dimensional network structure, aggregation of the electrode particles in the reducing atmosphere thereafter may be inhibited. Also, the aggregate also serves as partially covering the surfaces of the NiO particles 20, limiting an oxidation area of the Ni particles in power generation by the SOFC thereafter, and thus inhibiting irreversible expansion of the electrode particles.

According to the present embodiment, it is considered that, based on such actions, the fuel electrode doubling as the support of the solid oxide fuel cell whose conductivity and strength hardly lower through repetitive exposure to the reducing atmosphere/oxidazing atmosphere may be obtained.

Note that according to PLT 1, after forming a porous body having ceramic particles as a framework, electrode metal is introduced into holes of the porous body. However, firm connection is not made because the aggregate of the zirconia fine particles formed by the sol-gel reaction is not used. Since PLT 1 relates to an electrolyte-supported SOFC and thus may have a thin fuel electrode, this document has no consideration about deterioration of the strength of the fuel electrode. When this fuel electrode is applied to the fuel-electrode-supported SOFC, however, a problem of deterioration of the strength shall become obvious. Also, according to a method of PLT 1 to generate Ni particles from organometallic compound solution, even when impregnation is carried out a few dozen times, a conductive path may not be formed by Ni particles throughout a thick fuel electrode for the fuel-electrode-supported SOFC. Therefore, this method is not applicable to the fuel electrode of the fuel-electrode-supported SOFC described in the present embodiment.

The following is a description of each step in order, referring again to FIG. 4.

### (Step S1)

Although at least one selected from a group including zirconia, alumina, silica, and ceria may be used as the powder of oxide coarse particles, zirconia or ceria is preferable, and stabilized zirconia is particularly preferable. This is because an ionic transport number may be maintained in a stable manner in the reducing atmosphere/oxidazing atmosphere to which the fuel electrode is exposed. As the stabilized zirconia, for example, yttria-stabilized zirconia (YSZ), calcia stabilized zirconia, and magnesia stabilized zirconia may be mentioned.

The average particle diameter of the powder of oxide coarse particles is 30 to 90 µm. This is because, when the average particle diameter is smaller than 30 µm, the gap of the three-dimensional network structure is too small to allow the Ni particles to form an appropriate conduction path and, when the average particle diameter exceeds 90 µm, the oxide coarse particles are calcined insufficiently and the strength of the fuel electrode is deteriorated.

As a material of the first oxide fine particles dispersed in the first sol, at least one selected from the group including zirconia such as stabilized zirconia, alumina, silica, and ceria may be used, too. Concentration of solids of the first oxide fine particles in the first sol may be 10 to 60 mass%. This is because, when the concentration is under 10 mass%, an effect as the binder is lowered and, when the concentration is over 60 mass%, the Ni particles are covered and the sol has high viscosity and is cumbersome. The average particle diameter of the first oxide fine particles is 0.1 µm or smaller. This is because, when the average particle diameter is over 0.1 µm, an effect to promote calcination of the oxide coarse particles is lowered. Any commercially available products may be used as the sol like that, and ZR-30BS produced by Nissan Chemical Industries, Ltd. may be used as zirconia sol, Almina sol-100 produced by Nissan Chemical Industries, Ltd. may be used as almina sol, Snowtex produced by Nissan Chemical Industries, Ltd. may be used as silica sol, and CZ-30B produced by Nissan Chemical Industries, Ltd. may be used as ceria sol.

As for addition amounts, the powder of oxide coarse particles is preferably 60 to 95 mass% of total solids in the mixture, and the solids in the first sol is preferably 5 to 40 mass% of total solids in the mixture. Surfactants, dispersing agents, and thickeners for adjusting the viscosity may be added to the mixture, within a range not impairing the effects of the present invention.

### (Step S2)

As a method of obtaining the compact from the mixture, the wet method may be mentioned. The compact may be finished in a desired shape by a method of casting the mixture in a predetermined mold, a method of extrusion molding by adjusting the viscosity, or a method of impregnating, with the mixture, a sponge made of polyurethane or PVA having a network structure for transferring a framework structure.

### (Step S3)

The heat treatment is carried out in the atmosphere at temperature about, for example, 300 to 600 °C, which is below the sintering temperature of the compact, for about 1 to 5 hours. Carrying out the heat treatment at such a low temperature may reliably cause the sol-gel reaction of the zirconia sol and connect the YSZ coarse particles 12 via the zirconia fine particle aggregate 14. Thereby, the compact having high handling properties may be obtained. Since the temperature is set to 300 °C or higher, when an organic constituent is added to the mixture, the organic constituent may be burned down unfailingly. Here, a reason to set the temperature of the heat treatment as described above is as follows. That is, when the compact is sintered at its sintering temperature or higher in the heat treatment, the compact contracts greatly. Then, after completion of the fuel electrode, when the electrolyte material is applied and is sintered, the compact does not contract any more, while the electrolyte material greatly contracts. Due to a contraction difference between the compact and the electrolyte material at this time, cracks may be generated in a solid oxide electrolyte film. Therefore, the present embodiment does not carry out sintering of the compact at this stage but connects the YSZ coarse particles 12 by a progress of the sol-gel reaction. Accordingly, a contraction amount at this stage is decreased and the contraction difference at the following step is reduced, thereby suppressing the generation of cracks.

### (Step S4)

Although the NiO particles may be mentioned as the electrode particles, NiO particles to which copper or cobalt is added may also be used. An average particle diameter of the electrode particles is preferably 0.4 to 4.0 µm. When the average particle diameter is 0.4 µm or larger, durability of the fuel electrode may be enhanced by sufficiently inhibiting aggregation of the electrode particles. When the average particle diameter is 4.0 µm or smaller, active sites of the electrode particles may be sufficiently secured and high electrode performances may be obtained.

The second sol may be similar to the first sol. Note that material of the oxide fine particles of the first sol may be either the same as, or different from, material of the oxide fine particles of the second sol.

According to the present embodiment, also, the slurry includes, as the powder of oxide particles, powder of YSZ particles with the average particle diameter of 0.2 to 1.0 µm. Since some of the YSZ particles serve as the zirconia 24 for partially covering the surfaces of the NiO particles 20, the oxidation area of the Ni particle may be limited during power generation by the SOFC, and thereby the irreversible expansion of the electrode particles may be inhibited. Also, since the remaining YSZ particles are dispersed in the gap 16, aggregation of the Ni particles may be more inhibited.

The powder of oxide particles is not limited to YSZ but may be, similarly to the oxide coarse particles, at least one selected from the group including zirconia, alumina, silica, and ceria, and the stabilized zirconia is preferable. The average particle diameter of the powder of oxide particles is 0.2 to 1.0 µm. This is because, when the average particle diameter is 0.2 µm or larger, the surfaces of the NiO particles 20 may be effectively covered and, when it is 1.0 µm or smaller, aggregation of the electrode particles in the reducing atmosphere may be sufficiently inhibited.

As for preferable addition amounts relative to total solids in the slurry, the powder of electrode particles is 40 to 80 mass%, solids of the second sol is 10 to 30 mass%, and the powder of oxide particles is 10 to 30 mass%. As a kneading method of the slurry, a planetary kneading machine, a planetary ball mill or a three-roller machine may be used. Further, surfactants, dispersing agents, and thickeners for adjusting the viscosity may be added to the slurry, within a range not impairing the effects of the present invention.

### (Step S5)

Step S5 is carried out by, for example, a method of immersing the compact obtained after step S3 in the slurry and keeping the compact in a desiccator under reduced pressure. The reduced pressure is preferably around 10 mmHg, at which the slurry does not boil. A decompression state is maintained in the desiccator for about five minutes and then atmospheric pressure is retrieved. The ration of mass of the compact after step S3 relative to mass of electrode filled at step S5 is preferably 1:1-2.

Note that mass of the total solids in the first sol of the mixture and in the second sol of the slurry is preferably 5 to 60 mass% of total mass of the mixture and the slurry. This is because, when the mass is less than 5 mass%, the progress of aggregation of the electrode particles may not be sufficiently suppressed and, when the mass is over 60 mass%, the formation of the conductive path by the Ni particles may be inhibited.

### (Step S6)

The calcining of the compact is carried out under conditions of, for example, at temperature of 1300 to 1500 °C in the atmosphere for 1 to 10 hours. Thereby, ceramic components in the compact and in the slurry are sintered and the fuel electrode is finalized.

According to the present embodiment, since the three-dimensional network structure having the framework formed of the oxide coarse particles is formed and the gaps of the three-dimensional network structure is filled with the electrode particles, the fuel electrode may be produced without using a pore-forming material such as carbon and the like.

In the present specification, for the powder of oxide coarse particles included in the mixture, the powder of electrode particles and the powder of oxide particles included in the slurry, the "average particle diameter" thereof means a particle diameter at a cumulative value 50% (50% cumulative particle diameter: D50) in a particle size distribution obtained by a laser diffraction scattering method. For the first sol and the second sol, the "average particle diameter" thereof means manufacturer's indications of commercially available products to be used. In the present specification, also, "thicknesses of the fuel electrode, solid oxide electrolyte film and air electrode" are an average value of any five points in a polished cross-section of a sample filled with resin and observed by SEM.

### (Solid oxide fuel cell and method of producing the same)

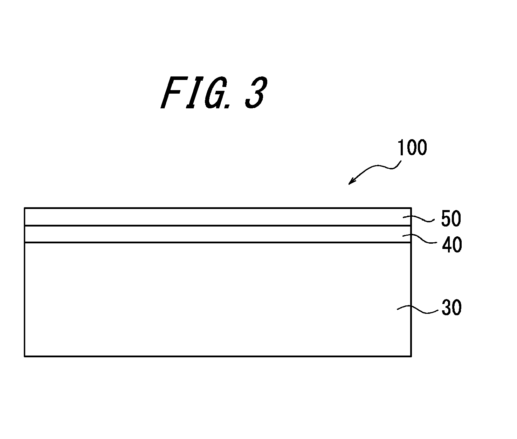

Next, the solid oxide fuel cell (SOFC) and a method of producing the same according to one embodiment of the present invention will be described. According to this method, in addition to the steps of the method of producing the fuel electrode 30 according to the present invention described above, a step of forming a solid oxide electrolyte film on the fuel electrode 30 and a step of forming an air electrode on the solid oxide electrolyte film are carried out. This method enables obtainment of a fuel-electrode-supported SOFC 100 characterized in having the fuel electrode 30, a solid oxide electrolyte film 40 formed on the fuel electrode 30, and an air electrode 50 formed on the solid oxide electrolyte film 40 as illustrated in FIG. 3. The SOFC 100 has the fuel electrode 30 with improved cycle resistance and thus may achieve a long life.

The solid oxide electrolyte film and the air electrode may be produced by conventional methods. Typically, a ceramic material such as YSZ and the like is used as the electrolyte material and slurry thereof is applied on the fuel electrode 30, and then calcination is carried out. For the air electrode, (La_{0.8}Sr_{0.2}) MnO₃ may be used as a material of the air electrode and slurry thereof is applied on the calcined solid oxide electrolyte film, and then calcination is carried out. Since the present embodiment is for the fuel-electrode-supported SOFC, a thickness of the solid oxide electrolyte film 40 may be about 5 to 50 µm.

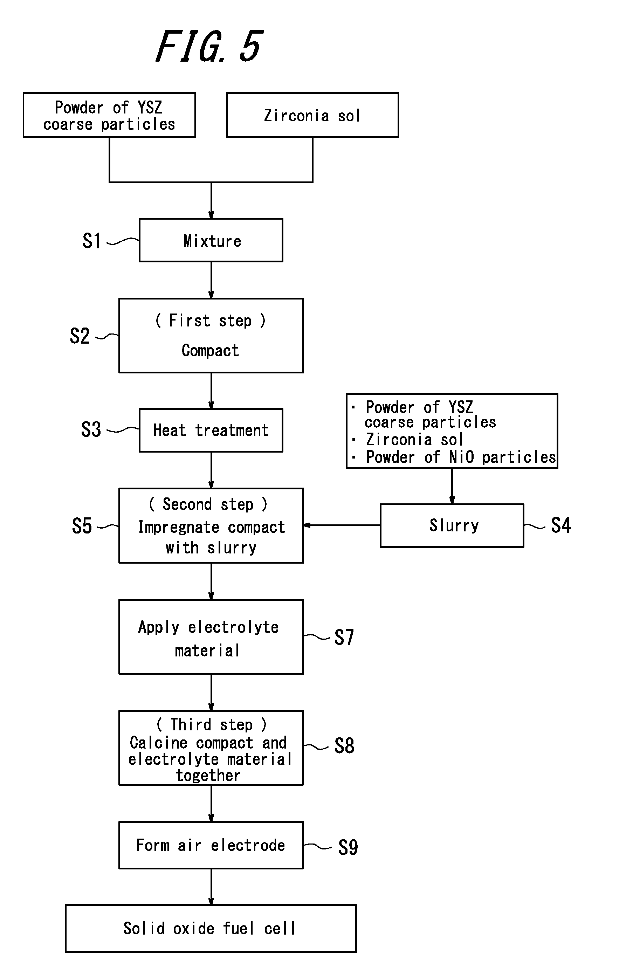

Here, the compact and the electrolyte material are preferably calcined together. This process will be described with reference to FIG. 5. Up to step S5 to impregnate the compact with the slurry, the same steps of the embodiment illustrated in FIG 4 are carried out. As illustrated in FIG. 5, the electrolyte material is applied on the compact at step S7 and calcined together with the compact at step S8. Thereby, the fuel electrode 30 and the solid oxide electrolyte film 40 are completed simultaneously. As a result, the contraction difference between the compact and the electrolyte material may be reduced and generation of cracks may be suppressed.

### EXAMPLES

### (Example 1)

In the following procedure according to the present invention, the fuel electrode according to the present invention was produced. First, powder of yttria-stabilized zirconia (YSZ) coarse particles (average particle diameter D50: 45 µm) and sol as the first sol containing zirconia fine particles dispersed therein (zirconia concentration: 30 mass%, average particle diameter: 63 nm, ZR-30BS produced by Nissan Chemical Industries, Ltd.) were mixed at a mass ratio of 79:21. From thus obtained mixture, a compact (thickness: 3 mm) was produced by the wet method. The compact was dried and subjected to a heat treatment at 500 °C in the atmosphere for 1 hour.

Next, the powder of NiO particles (average particle diameter D50: 1.0 µm), the powder of YSZ particles (average particle diameter D50: 0.5 µm) and, as the second sol, the zirconia sol the same as the one described above were mixed such that the mass of their solids satisfy a ratio 4:1:1, and thereby slurry was prepared. Subsequently, the compact after being subjected to the heat treatment was immersed in the slurry and held under reduced pressure at 10 mmHg in the desiccator for 5 minutes, followed by retrieval of the atmospheric pressure.

The compact thus obtained was calcined under conditions of 1400 °C in the atmosphere for 5 hours, and thereby a fuel electrode of Example 1 was produced. A thickness of the fuel electrode measured by the aforementioned method was 2.5 mm. This fuel electrode may serve as the support of the solid oxide fuel cell. Note that, in this example, mass of the total solids of the zirconia sol in the mixture and in the slurry (hereinafter, referred to as a "sol ratio") relative to the total mass of the mixture and the slurry is 15 mass%.

### (Examples 2-4)

In the same procedure as Example 1 other than changing a mixing ratio of the powder of YSZ coarse particles and the first sol so as to change the sol ratio to values shown in Table 1, fuel electrodes of Examples 2-4 (thickness: 2.5 mm) were produced.

### (Example 5, Comparative Examples 1 and 2)

In the same procedure as Example 1 other than changing the average particle diameter D50 of the powder of YSZ coarse particles to values shown in Table 1, fuel electrodes of Example 5 and Comparative Examples 1-2 (thickness: 2.5 mm) were produced.

### (Example 6)

In the same procedure as Example 1 other than using, as the first sol and the second sol, sol containing ceria fine particles dispersed therein (ceria concentration: 30 mass%, average particle diameter: 49 nm, CZ-30B produced by Nissan Chemical Industries, Ltd.) as shown in Table 1, a fuel electrode of Example 6 (thickness: 2.5 mm) was produced.

### (Example 7)

In the same procedure as Example 1 other than using, instead of the YSZ coarse particles, powder of alumina coarse particles (average particle diameter D50: 45 µm) and, as the first sol and the second sol, sol containing hydrated alumina fine particles dispersed therein (specific gravity: 1.1, average particle diameter: 100 nm x 10 nm, alumina-sol-100 produced by Nissan Chemical Industries, Ltd.) and setting the sol ratio at 20 mass% as shown in Table 1, a fuel electrode of Example 7 (thickness: 2.5 mm) was produced.

### (Example 8)

In the same procedure as Example 1 other than using, instead of the NiO powder, NiO powder containing Cu added thereto such that the electrode particles are composed ofNi (70 mol%) and Cu (30 mol%), a fuel electrode of Example 8 (thickness: 2.5 mm) was produced.

### (Comparative Example 3)

Mixed powder was prepared from NiO powder (average particle diameter D50: 1.0 µm) of 45 mass%, YSZ powder (average particle diameter D50: 0.5 µm) of 45 mass%, and carbon as the pore-forming material (average particle diameter D50: 3 µm) of 1 mass%. Next, the mixed powder of 67 mass% is mixed to a solvent in which polyvinyl butyral of 5 mass% is dissolved in a terpineol, and thereby slurry was prepared. Thus obtained slurry was molded into a sheet by a doctor blade method. Thus obtained compact was calcined under conditions of temperature at 1400 °C in the atmosphere for 5 hours, and thereby a fuel electrode of Comparative Example 3 (thickness: 2.5 mm) was produced.

### <Observation of structure of fuel electrode>

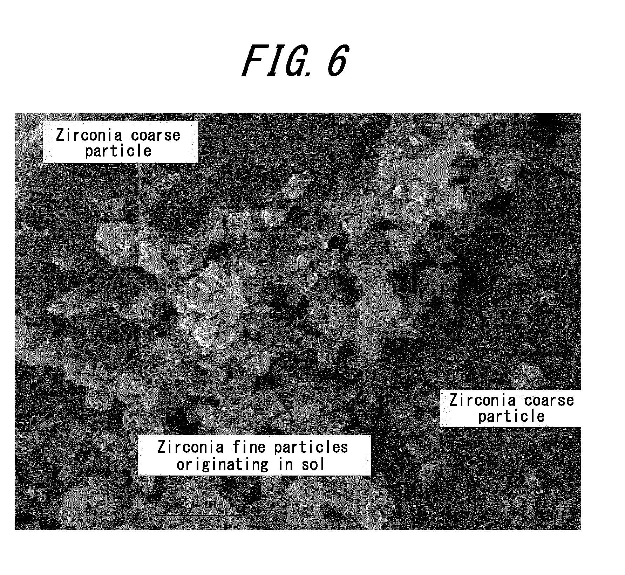

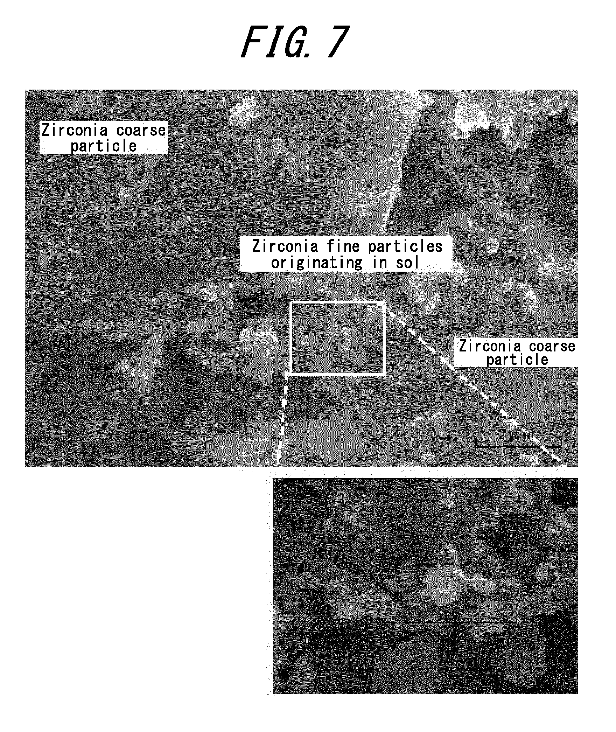

FIG. 6 and FIG. 7 are images of a scanning electron microscope (SEM) of the compact after being subjected to the heat treatment at 500 °C in Example 1. From those images, it can be seen that the aggregate of the zirconia fine particles in the zirconia sol intervenes between the YSZ coarse particles and thereby the YSZ coarse particles are connected to one another via the aggregate. This means that, even with the heat treatment at low temperature about 500 °C, by which the YSZ coarse particles alone cannot be connected to one another, the aggregate of the zirconia fine particles originating in the sol enables the YSZ coarse particles to connect to one another. According to the present example, as described above, the YSZ coarse particles were connected to one another via the aggregate of the zirconia fine particles originating in the sol, thereby forming three-dimensional network structure. Similar structures were observed in the other examples. It is clear that, since the tree-dimensional network structure is formed and then impregnated with the slurry containing the NiO particles, the YSZ coarse particles are connected to one another without the NiO particles.

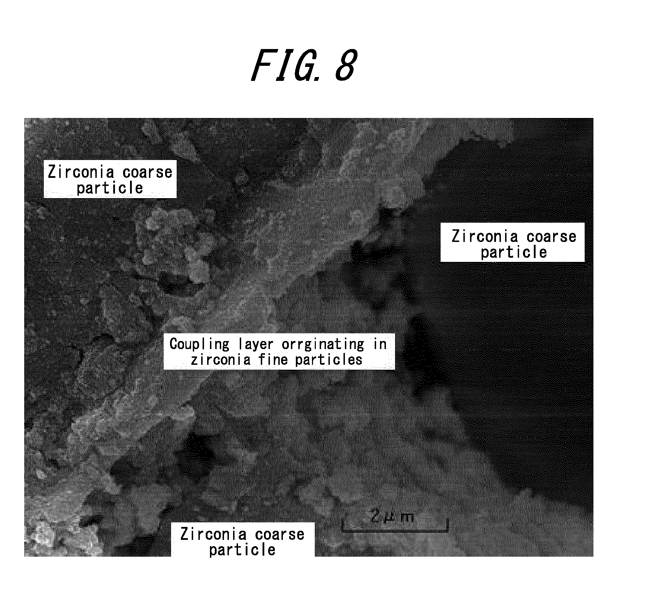

FIG. 8 is a referential SEM image of the compact of Example 1 after being subjected to the heat treatment not at 500 °C but at 800 °C. As can be seen from this image, aggregation and sintering of the zirconia fine particles in the zirconia sol have proceeded and the YSZ coarse particles are firmly connected to one another by the aggregate in which the zirconia fine particles are integrated with one another.

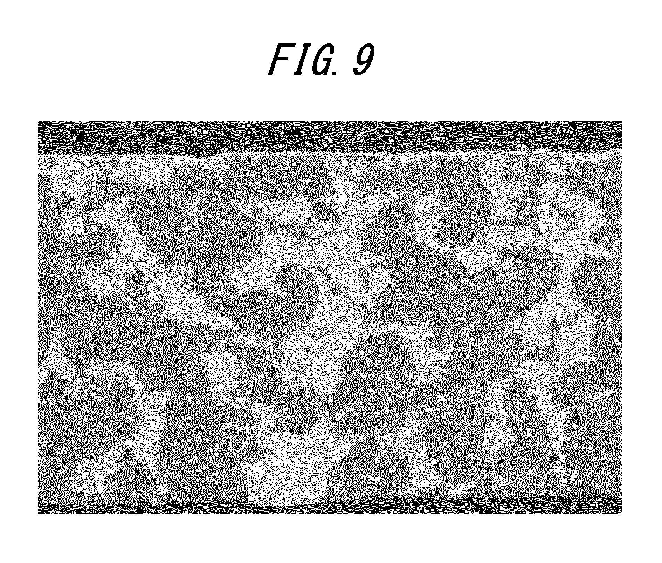

FIG. 9 is an image obtained by an energy dispersive X-ray (EDX) analysis of a cross-section of the fuel electrode of Example 1. In this image, the green color represents distributions of Zr by the YSZ coarse particles and the zirconia fine particles originating in the sol, and the red color represents a distribution of Ni of the NiO powder. From this image, it can be seen first that the NiO particles are dispersed in the gaps of the three-dimensional network structure. It can be also seen that, since the Ni in red are dotted and Zr in green are dispersed around the red dots in the gaps, the NiO particles are partially covered with the YSZ powder in the slurry and the aggregate of the zirconia fine particles originating in the sol. It is considered that, since the aggregate of the zirconia fine particles originating in the sol serves as the binder, the aggregate connects at least some of the NiO particles to the surface in the gap of the three-dimensional network structure. Similar images were observed in other examples.

### <Evaluation of cycle resistance property>

The fuel electrodes obtained in each of Examples and Comparative Examples were subjected to a redox cycle test as follows. That is, each fuel electrode was placed in a container maintained at 800 °C, in which a reducing atmosphere of H₂ at 99.9 % was maintained, for 30 minutes. Then, the atmosphere inside the container was replaced with nitrogen gas and the fuel electrode was held in the oxidizing atmosphere of the air for 30 minutes. This process was regarded as one cycle and repeated 50 times. Before and after the cycle test, to each of the fuel electrodes, conductivity was measured by a four-terminal method and three-point bending strength was also measured. Results are shown in Table 1.

**[Table 1]**

| | Production Conditions of Fuel Electrode | | | | | Cycle Resistance | | | |
|---|---|---|---|---|---|---|---|---|---|
| | Oxide Coarse Particle | | Electrode Particle | First Sol Second Sol | | Conductivity (S/cm²) | | Three-point Bending Strength (MPa) | |
| | Type | D50 (µm) | | Type | Sol Ratio (mass%) | Before Cycle | After Cycle | Before Cycle | After Cycle |
| Example 1 | YSZ | 45 | NiO | ZrO₂ | 15 | 880 | 800 | 110 | 100 |
| Example 2 | YSZ | 45 | NiO | ZrO₂ | 5 | 850 | 740 | 100 | 80 |
| Example 3 | YSZ | 45 | NiO | ZrO₂ | 30 | 890 | 850 | 120 | 110 |
| Example 4 | YSZ | 45 | NiO | ZrO₂ | 60 | 810 | 800 | 150 | 110 |
| Example 5 | YSZ | 75 | NiO | ZrO₂ | 15 | 880 | 800 | 90 | 80 |
| Example 6 | YSZ | 45 | NiO | CeO₂ | 15 | 950 | 940 | 120 | 100 |
| Example 7 | Al₂O₃ | 45 | NiO | Al₂O₃ | 20 | 810 | 800 | 150 | 130 |
| Example 8 | YSZ | 45 | NiO-30Cu | ZrO₂ | 15 | 920 | 930 | 130 | 110 |
| Comparative Example 1 | YSZ | 12 | NiO | ZrO₂ | 15 | 620 | 590 | 160 | 130 |
| Comparative Example 2 | YSZ | 150 | NiO | ZrO₂ | 15 | 790 | 610 | 85 | 40 |
| Comparative Example 3 | - | | NiO | - | | 950 | Damaged | 130 | Damaged |

As can be seen from Table 1, in Examples 1-8, high conductivity and high tree-point bending strength were obtained and, after the cycle test, deterioration of the conductivity and the three-point bending strength was sufficiently reducced. It is considered that this is because a strong three-dimensional network structure was formed from zirconia alone (including YSZ) without containing the Ni particles and also because, by connecting the Ni particles to the surface in the gaps of the three-dimensional network structure and, simultaneously, by partially covering the Ni particles with zirconia, the oxidation area of the Ni particle was limited while aggregation of the Ni particles was suppressed.

On the other hand, the fuel electrode of Comparative Example 3 produced by the conventional method was damaged after the cycle test and thus measurement of conductivity and three-point bending strength thereof could not be conducted. It is considered that this is because, since this fuel electrode was produced from a mixture of the NiO powder and the YSZ powder, Ni was oxidized to NiO in the course of repetition of the reducing atmosphere/oxidizing atmosphere and strength of the fuel electrode was reduced due to irreversible swelling of the electrode particles, and also because the aggregation of the Ni particles has proceeded in the course of repetitions of those atmospheres.

In Comparative Example 1 having the D50 of the powder of YSZ coarse particles smaller than a range thereof according to the present invention, the gaps of the three-dimensional network structure were so small that the conductive path could not be appropriately formed by the Ni particles and sufficient conductivity could not be obtained before and after the cycle. Also, in Comparative Example 2 having the D50 of the powder of YSZ coarse particles larger than the range thereof according to the present invention, since the sintering of the YSZ coarse particles did not sufficiently proceed, adequate three-point bending strength was not obtained both before and after the cycle.

### INDUSTRIAL APPLICABILITY

The present invention is useful for an SOFC industry and various industries to which the SOFC is applied.

### REFERENCE SIGNS LIST

- 10: Three-dimensional network structure
- 12: YSZ coarse particle (Oxide coarse particle)
- 14: Zirconia fine particle aggregate (Aggregate of first oxide fine particles)
- 16: gap
- 20: NiO particle (Electrode particle)
- 22: Zirconia fine particle aggregate (Aggregate of second oxide fine particles)
- 24: Zirconia
- 30: Fuel electrode
- 40: Solid oxide electrolyte film
- 50: Air electrode
- 100: Solid oxide fuel cell (SOFC)

## Claims

1. A fuel electrode doubling as a support of a solid oxide fuel cell, comprising:
a three-dimensional network structure formed of oxide coarse particles with an average particle diameter of 30 to 90 µm and a first sol containing first oxide fine particles with an average particle diameter of 0.1 µm or smaller dispersed therein, where the oxide coarse particles are connected to one another via an aggregate of the first oxide fine particles;
electrode particles having a function as an electrode catalyst dispersed in gaps of the three-dimensional network structure; and
an aggregate of second oxide fine particles that is formed of a second sol containing the second oxide fine particles with an average particle diameter of 0.1 µm or smaller dispersed therein and connects the electrode particles to a surface in the gap of the three-dimensional network structure,
wherein the oxide coarse particles are connected to one another without the electrode particles.

2. The fuel electrode according to claim 1, wherein the aggregate of the second oxide fine particles connects the electrode particles to the surface in the gap of the three-dimensional network structure and, simultaneously, partially covers surfaces of the electrode particles.

3. The fuel electrode according to claim 1 or 2, further comprising oxide particles with an average particle diameter of 0.2 to 1.0 µm that are dispersed in the gap of the three-dimensional network structure and partially cover surfaces of the electrode particles.

4. The fuel electrode according to claim 3, wherein the oxide particles are stabilized zirconia.

5. The fuel electrode according to any one of claims 1 to 4, wherein the electrode particles have an average particle diameter of 0.4 to 4.0 µm.

6. The fuel electrode according to any one of claims 1 to 5, wherein each of the oxide coarse particle, the first oxide fine particle and the second oxide fine particle is at least one selected from a group including zirconia, alumina, silica and ceria.

7. The fuel electrode according to claim 6, wherein each of the oxide coarse particle, the first oxide fine particle and the second oxide fine particle is stabilized zirconia.

8. A fuel-electrode-supported solid oxide fuel cell comprising the fuel electrode according to any one of claims 1 to 7, a solid oxide electrolyte film formed on the fuel electrode, and an air electrode formed on the solid oxide electrolyte film.

9. A method of producing a fuel electrode doubling as a support of a solid oxide fuel cell, comprising:
a first step of obtaining a compact from a mixture of powder of oxide coarse particles with an average particle diameter of 30 to 90 µm and a first sol containing first oxide fine particles with an average particle diameter of 0.1 µm or smaller dispersed therein;
a second step of impregnating the compact with slurry prepared by mixing powder of electrode particles having a function as an electrode catalyst and a second sol containing second oxide fine particles with an average particle diameter of 0.1 µm or smaller dispersed therein; and
a third step of, after the second step, obtaining a fuel electrode by calcining the compact.

10. The method according to claim 9, wherein, after the first step and before the second step, the compact is subjected to a heat treatment at temperature below a sintering temperature of the compact.

11. The method according to claim 9 or 10, wherein the slurry is prepared by further mixing powder of oxide particles with an average particle diameter of 0.2 to 1.0 µm; and optionally
wherein the oxide particles are stabilized zirconia.

12. The method according to any one of claims 9 to 11, wherein the powder of electrode particles has an average particle diameter of 0.4 to 4.0 µm.

13. The method according to any one of claims 9 to 12, wherein total mass of solids in the first sol of the mixture and in the second sol of the slurry is 5 to 60 mass% of total mass of the mixture and the slurry.

14. The method according to any one of claims 9 to 13, wherein each of the oxide coarse particle, the first oxide fine particle and the second oxide fine particle is at least one selected from a group including zirconia, alumina, silica and ceria; and optionally
wherein each of the oxide coarse particle, the first oxide fine particle and the second oxide fine particle is stabilized zirconia.

15. A method of producing a fuel-electrode-supported solid oxide fuel cell comprising, in addition to the steps of the method of producing the fuel cell according to any one of claims 9 to 14, a step of forming a solid oxide electrolyte film on the fuel electrode and a step of forming an air electrode on the solid oxide electrolyte film; and optionally
wherein the solid oxide electrolyte film is formed by, after the second step and before the third step, applying electrolyte material on the compact and, at the third step, calcining the electrolyte material together with the compact.

## Patentansprüche

1. Brennstoffelektrodendopplung als Träger einer Festoxidbrennstoffzelle, umfassend:
eine aus oxidischen Grobpartikeln mit einem mittleren Partikeldurchmesser von 30 bis 90 µm gebildete dreidimensionale Netzwerkstruktur und ein erstes Sol mit darin verteilten ersten oxidischen Feinpartikeln mit einem mittleren Partikeldurchmesser von 0,1 µm oder kleiner, wobei die oxidischen Grobpartikel über ein Aggregat der ersten oxidischen Feinpartikel miteinander verbunden sind;
Elektrodenpartikel, die eine Funktion als Elektrodenkatalysator aufweisen und in Lücken der dreidimensionalen Netzwerkstruktur verteilt sind; und
ein Aggregat von zweiten oxidischen Feinpartikeln, das aus einem zweiten Sol mit den darin verteilten zweiten oxidischen Feinpartikeln mit einem mittleren Partikeldurchmesser von 0,1 µm oder kleiner gebildet wird und die Elektrodenpartikel mit einer Oberfläche in der Lücke der dreidimensionalen Netzwerkstruktur verbindet,
wobei die oxidischen Grobpartikel ohne die Elektrodenpartikel miteinander verbunden sind.

2. Brennstoffelektrode nach Anspruch 1, wobei das Aggregat der zweiten oxidischen Feinpartikel die Elektrodenpartikel mit der Oberfläche in der Lücke der dreidimensionalen Netzwerkstruktur verbindet und gleichzeitig teilweise Oberflächen der Elektrodenpartikel abdeckt.

3. Brennstoffelektrode nach Anspruch 1 oder 2, ferner umfassend oxidische Partikel mit einem mittleren Partikeldurchmesser von 0,2 bis 1,0 µm, die in der Lücke der dreidimensionalen Netzwerkstruktur verteilt sind und teilweise Oberflächen der Elektrodenpartikel abdecken.

4. Brennstoffelektrode nach Anspruch 3, wobei es sich bei den oxidischen Partikeln um stabilisiertes Zirkonoxid handelt.

5. Brennstoffelektrode nach einem der Ansprüche 1 bis 4, wobei die Elektrodenpartikel einen mittleren Partikeldurchmesser von 0,4 bis 4,0 µm aufweisen.

6. Brennstoffelektrode nach einem der Ansprüche 1 bis 5, wobei es sich bei dem oxidischen Grobpartikel, dem ersten oxidischen Feinpartikel und dem zweiten oxidischen Feinpartikel jeweils um mindestens eines aus einer Gruppe bestehend aus Zirkonoxid, Aluminiumoxid, Siliziumoxid und Cerdioxid handelt.

7. Brennstoffelektrode nach Anspruch 6, wobei es sich bei dem oxidischen Grobpartikel, dem ersten oxidischen Feinpartikel und dem zweiten oxidischen Feinpartikel jeweils um stabilisiertes Zirkonoxid handelt.

8. Von einer Brennstoffelektrode getragene Festoxidbrennstoffzelle, umfassend die Brennstoffelektrode nach einem der Ansprüche 1 bis 7, eine auf der Brennstoffelektrode gebildete Festoxidelektrolytschicht und eine auf der Festoxidelektrolytschicht gebildete Luftelektrode.

9. Verfahren zur Herstellung einer Brennstoffelektrodendopplung als Träger einer Festoxidbrennstoffzelle, umfassend:
einen ersten Schritt zum Erhalt eines Presskörpers aus einer Mischung aus Pulver aus oxidischen Grobpartikeln mit einem mittleren Partikeldurchmesser von 30 bis 90 µm und einem ersten Sol mit darin verteilten ersten oxidischen Feinpartikeln mit einem mittleren Partikeldurchmesser von 0,1 µm oder kleiner;
einen zweiten Schritt zur Imprägnierung des Presskörpers mit einer Aufschlämmung, die durch Mischen eines Pulver aus Elektrodenpartikeln mit einer Funktion als Elektrodenkatalysator und eines zweiten Sols mit darin verteilten zweiten oxidischen Feinpartikeln mit einem mittleren Partikeldurchmesser von 0,1 µm oder kleiner hergestellt wurde; und
einen dritten Schritt nach dem zweiten Schritt zum Erhalt einer Brennstoffelektrode durch Calcinieren des Presskörpers.

10. Verfahren nach Anspruch 9, wobei der Presskörper nach dem ersten Schritt und vor dem zweiten Schritt einer Wärmebehandlung bei einer Temperatur unter einer Sintertemperatur des Presskörpers unterzogen wird.

11. Verfahren nach Anspruch 9 oder 10, wobei die Aufschlämmung ferner durch Mischen eines Pulvers aus oxidischen Partikeln mit einem mittleren Partikeldurchmesser von 0,2 bis 1,0 µm hergestellt wird; und
wobei es sich bei den oxidischen Partikeln gegebenenfalls um stabilisiertes Zirkonoxid handelt.

12. Verfahren nach einem der Ansprüche 9 bis 11, wobei das Pulver aus Elektrodenpartikeln einen mittleren Partikeldurchmesser von 0,4 bis 4,0 µm aufweist.

13. Verfahren nach einem der Ansprüche 9 bis 12, wobei die Gesamtmasse an Feststoffen im ersten Sol der Mischung und im zweiten Sol der Aufschlämmung 5 bis 60 Masse-% der Gesamtmasse der Mischung und der Aufschlämmung beträgt.

14. Verfahren nach einem der Ansprüche 9 bis 13, wobei es sich bei dem oxidischen Grobpartikel, dem ersten oxidischen Feinpartikel und dem zweiten oxidischen Feinpartikel jeweils um mindestens eines aus einer Gruppe bestehend aus Zirkonoxid, Aluminiumoxid, Siliziumoxid und Cerdioxid handelt; und
wobei es sich bei dem oxidischen Grobpartikel, dem ersten oxidischen Feinpartikel und dem zweiten oxidischen Feinpartikel jeweils gegebenenfalls um stabilisiertes Zirkonoxid handelt.

15. Verfahren zur Herstellung einer von einer Brennstoffelektrode getragenen Festoxidbrennstoffzelle, das zusätzlich zu den Schritten des Verfahrens zur Herstellung der Brennstoffzelle gemäß einem der Ansprüche 9 bis 14 einen Schritt zur Bildung einer Festoxidelektrolytschicht auf der Brennstoffelektrode und einen Schritt zur Bildung einer Luftelektrode auf der Festoxidelektrolytschicht umfasst; und
wobei gegebenenfalls die Festoxidelektrolytschicht nach dem zweiten Schritt und vor dem dritten Schritt gebildet wird, indem Elektrolytmaterial auf den Presskörper aufgebracht wird und im dritten Schritt das Elektrolytmaterial zusammen mit dem Presskörper calciniert wird.

## Revendications

1. Electrode combustible servant également de support de pile à combustible oxyde solide, comprenant :
une structure de réseau en tridimensionnelle constitué de particules grossières d'oxyde d'un diamètre particulaire moyen de 30 à 90 µm et un premier sol contenant de premières fines particules d'oxyde d'un diamètre particulaire moyen inférieur ou égal à 0,1 µm dispersées dans ledit sol, où les particules grossières d'oxyde sont connectées l'une à l'autre par le biais d'un agrégat des premières fines particules d'oxyde ;
des particules d'électrode ayant une fonction de catalyseur d'électrode dispersées dans des fissures de la structure de réseau tridimensionnelle ; et
un agrégat de second fines particules d'oxyde constitué d'un second sol contenant les secondes fines particules d'oxyde d'un diamètre particulaire moyen inférieur ou égal à 0,1 µm dispersées dans ledit sol, et connectant les particules d'électrode à une surface dans la fissure de la structure de réseau tridimensionnelle,
où les particules grossières d'oxyde sont connectées l'une à l'autre sans les particules d'électrode.

2. Electrode combustible selon la revendication 1, où l'agrégat des secondes fines particules d'oxyde connecte les particules d'électrode à la surface dans la fissure de la structure de réseau tridimensionnelle et simultanément recouvre partiellement les surfaces des particules d'électrode.

3. Electrode combustible selon la revendication 1 ou 2, comprenant en outre des particules d'oxyde d'un diamètre particulaire moyen de 0,2 à 1,0 µm qui sont dispersées dans la fissure de la structure de réseau tridimensionnelle et recouvrent partiellement les surfaces des particules d'électrode.

4. Electrode combustible selon la revendication 3, où les particules d'oxyde sont de la zircone stabilisée.

5. Electrode combustible selon l'une des revendications 1 à 4, où les particules d'électrode possèdent un diamètre particulaire moyen de 0,4 à 4 µm.

6. Electrode combustible selon l'une des revendications 1 à 5, où chacune de la particule grossière d'oxyde, la première fine particule d'oxyde et la seconde fine particule d'oxyde est au moins une sélectionnée par le groupe consistant en zircone, alumine, silice et l'oxyde cérique.

7. Electrode combustible selon la revendication 6, où chacune de la particule grossière d'oxyde, la première fine particule d'oxyde et la seconde fine particule d'oxyde est de la zircone stabilisée.

8. Pile à combustible oxyde solide supportée par une électrode combustible comprenant l'électrode combustible selon l'une des revendications 1 à 7, un film électrolytique à base d'un oxyde solide formé sur l'électrode combustible et une électrode sans noyau formée sur le film électrolytique à base d'un oxyde solide.

9. Procédé de fabrication d'une électrode combustible servant également de support de pile à combustible oxyde solide, comprenant :
une première phase consistant à obtenir un compact à partir d'un mélange de poudre de particules grossières d'oxyde avec un diamètre particulaire moyen de 30 à 90 µm un premier sol contenant de premières fines particules d'oxyde d'un diamètre particulaire moyen inférieur ou égal à 0,1 µm dispersées dans ledit sol ;
une deuxième phase consistant à imprégner le compact d'un laitier préparé en mélangeant de la poudre de particules d'électrode ayant une fonction de catalyseur d'électrode et un second sol contenant de secondes fines particules d'oxyde d'un diamètre particulaire moyen inférieur ou égal à 0,1 µm dispersées dans ledit sol; et
une troisième phase, suivant la deuxième phase, consistant à obtenir une électrode combustible en calcinant le compact.

10. Procédé selon la revendication 9, où, après la première phase et avant la deuxième phase, le compact est soumis à un traitement thermique à une température inférieure à une température de frittage du compact.

11. Procédé selon la revendication 9 ou la revendication 10, où l'on élabore le laitier en mélangeant davantage la poudre de particules d'oxyde d'un diamètre particulaire moyen de 0,2 à 1,0 µm; et
où les particules d'oxyde sont de la zircone stabilisée.

12. Procédé selon l'une quelconque des revendications 9 à 11, où la poudre des particules d'électrode possède un diamètre particulaire moyen de 0,4 à 4 µm.

13. Procédé selon l'une quelconque des revendications 9 à 12, où la masse totale de solides dans le premier sol du mélange et dans le second sol du laitier est comprise entre 5 et 60 % de la masse totale du mélange et du laitier.

14. Procédé selon l'une quelconque des revendications 9 à 13, où chacune de la particule grossière d'oxyde, la première fine particule d'oxyde et la seconde fine particule d'oxyde est au moins une sélectionnée par le groupe consistant en zircone, alumine, silice et l'oxyde cérique ; et éventuellement
où chacune de la particule grossière d'oxyde, la première fine particule d'oxyde et la seconde fine particule d'oxyde est de la zircone stabilisée.

15. Procédé de production d'une pile à combustible oxyde solide supportée par une électrode combustible comprenant, en plus des phases du procédé de production de la pile combustible selon l'une des revendications 9 à 14, une phase de formation d'un film électrolytique à base d'un oxyde solide sur la pile combustible et une phase de formation d'une électrode sans noyau sur le film électrolytique à base d'un oxyde solide; et éventuellement
où le film électrolytique à base d'un oxyde solide est formé par, après la deuxième phase et avant la troisième phase, application du matériau électrolytique sur le compact et, dans la troisième phase, calcination du matériau électrolytique en même temps que le compact.
